# EUROPEAN PATENT APPLICATION

(11) **EP 4 524 868 A1**
(43) Date of publication of application: **19.03.2025**
(21) Application number: 22940948.7
(22) Date of filing: 12.05.2022
(51) Int. Cl.: G06Q 50/10

(54) **INFORMATION PROCESSING METHOD AND INFORMATION PROCESSING DEVICE**

(71) Applicant: NISSAN MOTOR CO., LTD., Kanagawa 221-0023 (JP)
(72) Inventor: KASAI, Jun, Atsugi-shi, Kanagawa 243-0123 (JP)
(74) Representative: Osha BWB
(86) International application number: PCT/JP2022/020109
(87) International publication number: WO 2023/218616

(57) **Abstract**

An information processing method for providing information to a user, the method including: acquisition processing of acquiring movement means of the user; and provision processing of, when it is determined that the user is present at a predetermined location, selecting at least one of a plurality of contents set for the predetermined location based on the movement means of the user and providing the selected content to the user.

## Description

### TECHNICAL FIELD

The present invention relates to an information processing method and an information processing device for providing information to a user.

### BACKGROUND ART

In the related art, there is a technique for displaying a map or a tourist spot on a terminal carried by a user. For example, JP2020-123082A discloses a technique of displaying an augmented reality screen of a current position of a user terminal when an augmented reality screen for guiding a tourist spot is displayed on the user terminal.

### SUMMARY OF INVENTION

It is assumed that even when the augmented reality screen of the current position of the user terminal is displayed as in the related art described above, unnecessary information is displayed on the user terminal depending on movement means of the user. For example, when the user is moving by an automobile, information for walking may be displayed on the user terminal. In such a case, the user is given a sense of discomfort. In addition, since unnecessary information provision processing occurs, an amount of computation of a content providing device increases.

An object of the present invention is to provide a more appropriate content according to movement means of a user and to improve efficiency of a computation load related to information processing.

An aspect of the present invention is an information processing method for providing information to a user. The information processing method includes: acquisition processing of acquiring movement means of a user; and provision processing of, when it is determined that the user is present at a predetermined location, selecting at least one of a plurality of contents set for the predetermined location based on the movement means of the user and providing the selected content to the user.

### BRIEF DESCRIPTION OF DRAWINGS

[FIG. 1] FIG. 1 is a diagram illustrating an example of a system configuration of an information processing system.
[FIG. 2] FIG. 2 is a block diagram illustrating a functional configuration example of a content providing server and an electronic device.
[FIG. 3] FIG. 3 is a diagram schematically illustrating information stored in a device information DB.
[FIG. 4] FIG. 4 is a diagram schematically illustrating information stored in a content DB.
[FIG. 5] FIG. 5 is a diagram illustrating a transition example of a display screen displayed on a display unit of the electronic device.
[FIG. 6] FIG. 6 is a simplified diagram illustrating movement means that may be used by a user.
[FIG. 7] FIG. 7 is a simplified diagram illustrating a relation example between a route to a registration location and main movement means.
[FIG. 8] FIG. 8 is a simplified diagram illustrating a relation example between a registration location managed by the content providing server and the movement means of the user.
[FIG. 9] FIG. 9 is a diagram illustrating an output example of a content provided to the user by the content providing server when the movement means of the user is walking.
[FIG. 10] FIG. 10 is a diagram illustrating an output example of a content provided to the user by the content providing server when the movement means of the user is an automobile.
[FIG. 11] FIG. 11 is a diagram illustrating an output example of a content according to the movement means of the user.
[FIG. 12] FIG. 12 is a diagram illustrating an example of a content display screen displayed on the display unit of the electronic device.
[FIG. 13] FIG. 13 is a diagram illustrating an example of the content display screen displayed on the display unit of the electronic device.
[FIG. 14] FIG. 14 is a flowchart illustrating an example of content output processing in the electronic device.
[FIG. 15] FIG. 15 is a flowchart illustrating an example of information storage processing in the content providing server.
[FIG. 16] FIG. 16 is a flowchart illustrating an example of content provision processing in the content providing server.

### DESCRIPTION OF EMBODIMENTS

Hereinafter, an embodiment of the present invention will be described with reference to the accompanying drawings.

### [Configuration Example of Information Processing System]

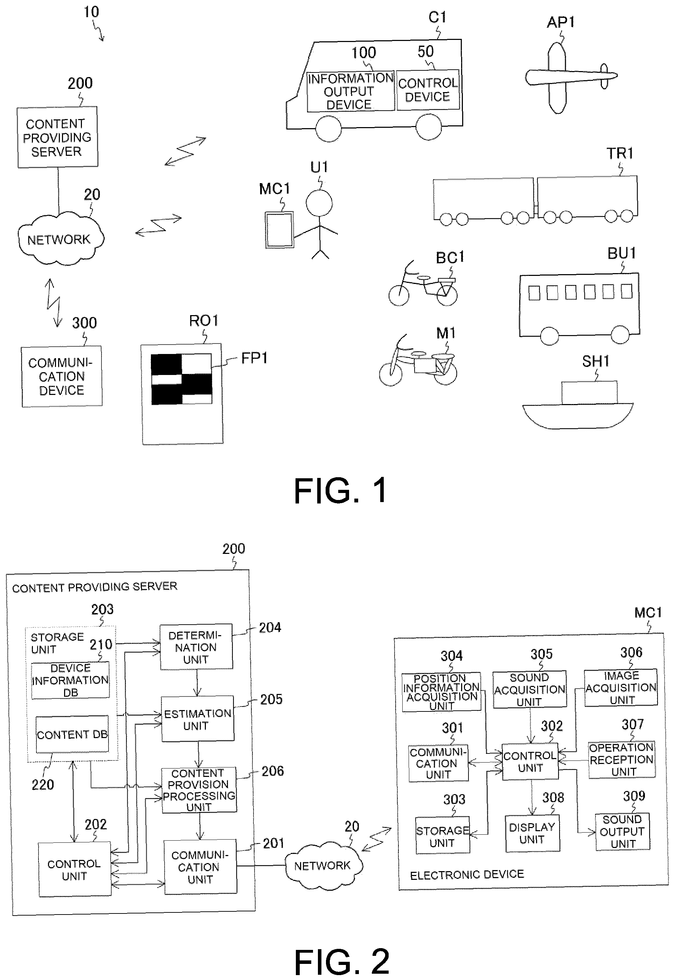

FIG. 1 is a diagram illustrating an example of a system configuration of an information processing system 10. The information processing system 10 is a communication system that executes processing of providing various contents to a user registered in a content providing server 200. A user U1 is assumed to be a user who owns an automobile C1. In addition, it is assumed that the user U1 may use walking, a train TR1, a bus BU1, a motorcycle M1, a bicycle BC1, a ship SH1, an airplane AP1, and the like as movement means. In FIG. 1, an electronic device MC1 is illustrated as a device owned by the user U1 for ease of description, but the present invention is not limited thereto, and an on-vehicle device, a carry-in device for a vehicle, or a device that may be worn by the user U1 may be used. In addition, although the train TR1, the bus BU1, the motorcycle M1, the bicycle BC1, the ship SH1, and the airplane AP1 are exemplified as the movement means, a plurality of movement means may be used, and another movement means may be used.

The information processing system 10 includes a plurality of devices connected via a network 20. For example, a control device 50, an information output device 100, the content providing server 200, a communication device 300, and the electronic device MC1 are connected via the network 20. Regarding communication among the devices, communication using wired communication or communication using wireless communication is performed. In addition, regarding the communication among the devices, direct communication may be performed among the devices other than the communication via the network 20. A communication device may be installed in at least one of the train TR1, the bus BU1, the motorcycle M1, the bicycle BC1, the ship SH1, the airplane AP1, and an object RO1. In this case, the communication devices installed in the movement means are connected to the content providing server 200 or the like via the network 20.

The control device 50 and the information output device 100 are on-vehicle devices installed in the automobile C1. For example, the control device 50 acquires vehicle information related to the automobile C1 and user information related to an occupant of the automobile C1, and transmits the acquired information to the content providing server 200. For example, the vehicle information and the user information are acquired using various sensors installed in the automobile C1.

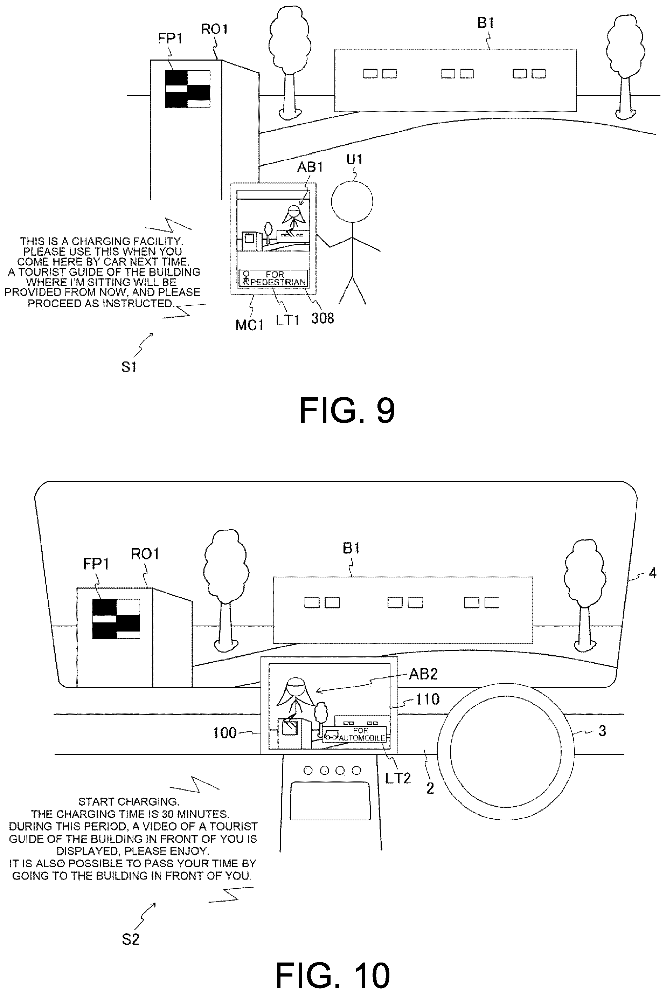

The information output device 100 is a device capable of outputting a content transmitted from the content providing server 200. The information output device 100 is implemented by, for example, a tablet terminal, a car navigation device, or an in-vehicle infotainment (IVI). A content output example is illustrated in FIG. 10.

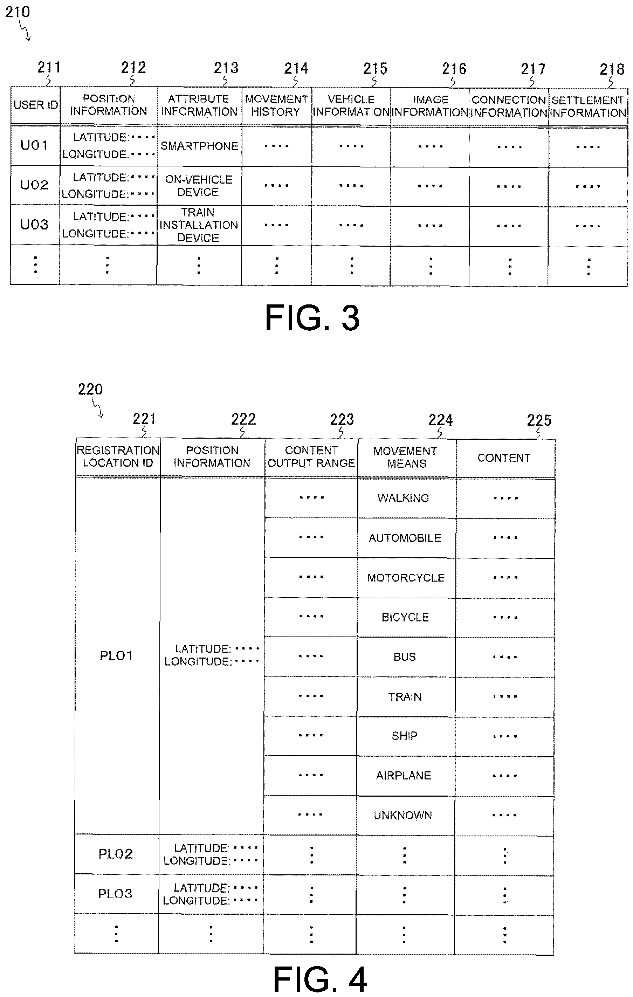

The content providing server 200 is an information presentation device that implements a content providing service for providing the user U1 with a content set for a registration location. When the content providing service is used, the user U1 needs to register use of the content providing service. The registration location is a location where a predetermined content is provided to the content providing server 200, and is managed by a content DB 220 (see FIGS. 2 and 4). Examples of the registration location include a park, a theme park, an amusement park, a shopping mall, and a tourist site. An object and a device for detecting presence of the user U1 are installed at the registration location. For example, the object RO1 and the communication device 300 are installed. A configuration of the content providing server 200 will be described in detail with reference to FIG. 2 and the like.

The communication device 300 is a device installed at a registration location managed by the content providing server 200. In addition, the communication device 300 performs communication with an electronic device present in the vicinity of the communication device 300 using wireless communication or wired communication, and transmits a communication result to the content providing server 200. For example, at the time of executing exchange of predetermined information with the electronic device MC1 using wireless communication or wired communication, the communication device 300 determines that predetermined communication is established between the electronic device MC1 and the communication device 300, and transmits a determination result to the content providing server 200. Accordingly, the content providing server 200 may determine that the user U1 carrying the electronic device MC1 is present around the registration location where the communication device 300 is installed.

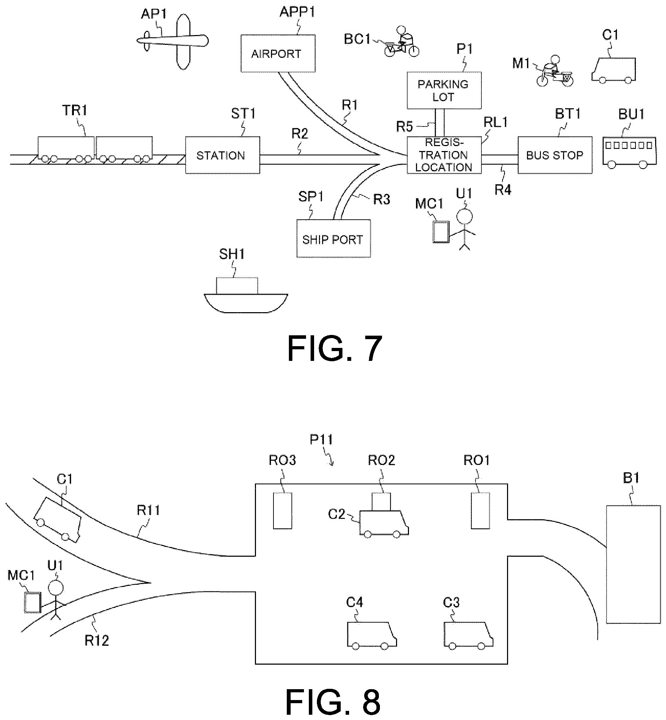

The object RO1 is an object installed at a registration location managed by the content providing server 200. A feature portion FP1 is provided in at least a part of an appearance of the object RO1. For example, when the registration location is a park, a gate or the like of an entrance of the park can be set as the object RO1. In addition, when the registration location is a parking lot provided with a charging facility for an electric vehicle, the object RO1 may be a charging station or the like. This example is illustrated in FIGS. 8 to 10.

The feature portion FP1 is a portion including identification information capable of identifying a registration location, the object RO1 installed at the registration location, and other objects or buildings installed around the registration location. The identification information may be identified by, for example, a captured image captured by the electronic device MC1. As the identification information, for example, a QR code (registered trademark) or a specific marker can be used. The specific marker is a marker from which specific information, for example, a registration location ID (see FIG. 4) may be acquired by object recognition processing. For example, the electronic device MC1 captures an image of the object RO1 such that the feature portion FP1 is included in an image capturing range, and acquires a captured image including the feature portion FP1. Next, the electronic device MC1 acquires the identification information based on the feature portion FP1 included in the captured image. As a method for acquiring the identification information, a known acquisition method can be used. Next, the electronic device MC1 transmits the acquired identification information to the content providing server 200. Accordingly, the content providing server 200 may determine that the user U1 carrying the electronic device MC1 is present around the registration location where the object RO1 is installed.

The electronic device MC1 is a portable information processing device carried by the user U1, and is, for example, an information processing device such as a smartphone, a tablet terminal, or a portable personal computer. In addition, the electronic device MC1 is a device capable of outputting the content transmitted from the content providing server 200. A configuration of the electronic device MC1 will be described in detail with reference to FIG. 2 and the like.

### [Configuration Example of Content Providing Server and Electronic Device]

FIG. 2 is a block diagram illustrating a functional configuration example of the content providing server 200 and the electronic device MC1.

The content providing server 200 includes a communication unit 201, a control unit 202, a storage unit 203, a determination unit 204, an estimation unit 205, and a content provision processing unit 206. The control unit 202, the determination unit 204, the estimation unit 205, and the content provision processing unit 206 are implemented by a controller capable of executing processing of providing information to the user U1.

The communication unit 201 performs exchange of various types of information with another device by using wired communication or wireless communication based on control of the control unit 202.

The control unit 202 controls each unit based on various programs stored in the storage unit 203. The control unit 202 is implemented by a processing device such as a central processing unit (CPU).

The storage unit 203 is a storage medium that stores various types of information. For example, the storage unit 203 stores various types of information (for example, control program, map information DB, device information DB 210, and content DB 220) necessary for the control unit 202 to perform various types of processing. The storage unit 203 stores various types of information acquired via the communication unit 201. As the storage unit 203, for example, a read only memory (ROM), a random access memory (RAM), a hard disk drive (HDD), a solid state drive (SSD), or a combination thereof may be used. The device information DB 210 and the content DB 220 will be described in detail with reference to FIGS. 3 and 4.

The determination unit 204 determines that a user who uses the content providing service is present at a registration location based on the control of the control unit 202, and outputs a determination result to the estimation unit 205. For example, the determination unit 204 determines, based on satisfaction of a proximity condition between the communication device 300 installed at the registration location and the electronic device MC1 associated with the user U1, that the user U1 is present at the registration location. In addition, for example, the determination unit 204 determines, based on satisfaction of a proximity condition between the object RO1 installed at the registration location and the electronic device MC1 associated with the user U1, that the user U1 is present at the registration location. For example, when a current location of the electronic device MC1 is included in a predetermined range based on the registration location, the determination unit 204 determines that the proximity condition is satisfied and determines that the user U1 is present at the registration location. In addition, for example, when the captured image acquired by the electronic device MC1 includes feature information related to the registration location, for example, the feature portion FP1, the determination unit 204 determines that the proximity condition is satisfied and determines that the user U1 is present at the registration location. In addition, for example, when exchange of predetermined information is executed using wireless communication or wired communication between the electronic device MC1 and the communication device 300, the determination unit 204 determines that the proximity condition is satisfied and determines that the user U1 is present at the registration location. The determination unit 204 is implemented by a processing device such as CPU. The determination methods will be described in detail with reference to FIGS. 4 and 7 and the like.

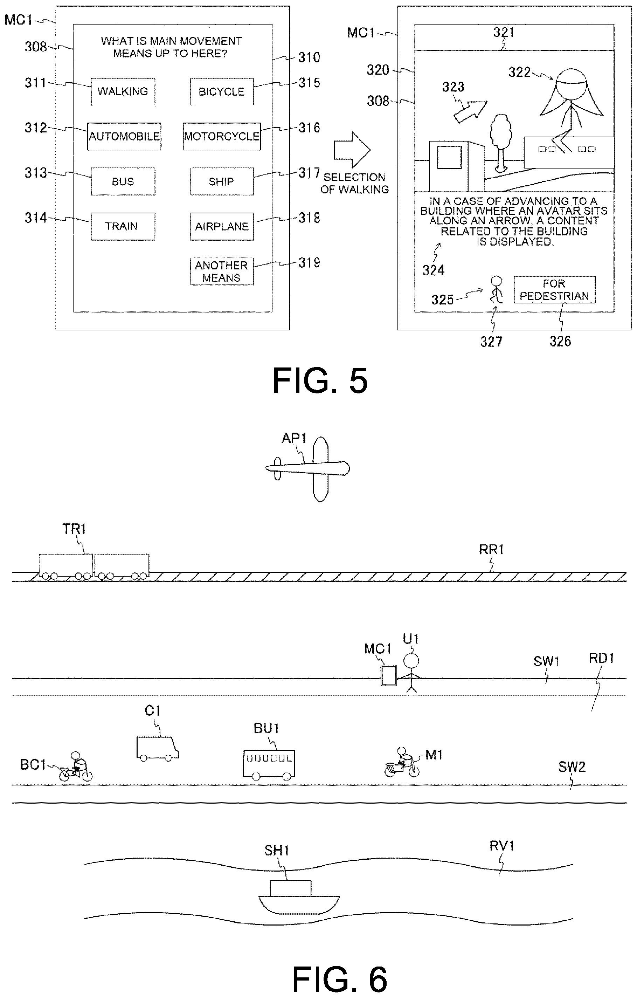

The estimation unit 205 estimates movement means of the user determined to be present at the registration location by the determination unit 204 based on the control of the control unit 202, and outputs an estimation result to the content provision processing unit 206. For example, the estimation unit 205 estimates the movement means of the user U1 based on device information related to at least one of the electronic device MC1 associated with the user U1 and an installation device installed in the movement means used by the user U1. The movement means of the user U1 may be estimated based on at least one of an attribute of the electronic device MC1 or the installation device and information related to a movement history of the electronic device MC1 or the installation device as the device information. The estimation unit 205 is implemented by a processing device such as CPU. The estimation methods will be described in detail with reference to FIGS. 5 and 6 and the like.

The content provision processing unit 206 uses the device information DB 210 and the content DB 220 to cause the user determined to be present at the registration location by the determination unit 204 to execute processing of providing a content corresponding to the movement means estimated by the estimation unit 205. The content provision processing unit 206 is implemented by a processing device such as CPU. The processing for providing a content will be described in detail with reference to FIGS. 8 to 13 and the like.

The electronic device MC1 includes a communication unit 301, a control unit 302, a storage unit 303, a position information acquisition unit 304, a sound acquisition unit 305, an image acquisition unit 306, an operation reception unit 307, a display unit 308, and a sound output unit 309.

The communication unit 301 performs exchange of various types of information with another device by using wired communication or wireless communication based on the control of the control unit 302.

The control unit 302 controls each unit based on various programs stored in the storage unit 303. The control unit 302 is implemented by a processing device such as CPU.

The storage unit 303 is a storage medium that stores various types of information. For example, the storage unit 303 stores various information (for example, control program) necessary for the control unit 302 to perform various types of processing. In addition, the storage unit 303 stores various types of information acquired via the communication unit 301. As the storage unit 303, for example, ROM, RAM, HDD, SSD, or a combination thereof can be used.

The position information acquisition unit 304 acquires position information related to a position where the electronic device MC1 is present, and outputs the acquired position information to the control unit 302. For example, it can be implemented by a global navigation satellite system (GNSS) receiver that acquires position information using GNSS. The position information includes data related to positions such as latitude, longitude, and altitude at the time of receiving a GNSS signal. In addition, the position information may be acquired by another position information acquisition method. For example, the position information may be derived using information from an access point or a base station present in the vicinity. In addition, the position information may be acquired using a beacon.

The sound acquisition unit 305 acquires sound around the electronic device MC1 based on the control of the control unit 302, and outputs information related to the acquired sound to the control unit 302. For example, one or a plurality of microphones or sound acquisition sensors can be used as the sound acquisition unit 305.

The image acquisition unit 306 captures a subject to generate an image (image data) based on the control of the control unit 302, and outputs information related to the generated image to the control unit 302. The image acquisition unit 306 includes, for example, one or a plurality of camera devices or image sensors capable of capturing a subject.

The operation reception unit 307 receives an operation from the user, and outputs the received operation content to the control unit 302.

The display unit 308 is a display unit that displays various images based on the control of the control unit 302. As the display unit 308, for example, a display panel such as an organic electroluminescence (EL) panel or a liquid crystal display (LCD) panel can be used. The operation reception unit 307 and the display unit 308 may be configured as a touch panel on which the user may perform an operation input by touching or approaching a display surface with his/her finger, or may be configured as a separate user interface. FIGS. 5, 9, and 11 to 13 illustrate examples in which the operation reception unit 307 and the display unit 308 are touch panels.

The sound output unit 309 outputs sound to the outside of the electronic device MC1 based on the control of the control unit 302. For example, one or more speakers can be used as the sound output unit 309. The operation reception unit 307, the display unit 308, and the sound output unit 309 are examples of a user interface, and some of them may be omitted, or other user interfaces may be used.

### [Content Example of Device Information DB]

FIG. 3 is a diagram schematically illustrating information stored in the device information DB 210. The device information DB 210 is a database for managing device information related to a device (including electronic device MC1, control device 50, and information output device 100) owned by a user (including the user U1) who uses the content providing service.

The device information DB 210 stores position information 212, attribute information 213, a movement history 214, vehicle information 215, image information 216, connection information 217, and settlement information 218 in association with a user ID 211. Some of the information are sequentially transmitted to and stored in the content providing server 200 from the electronic device MC1 and the control device 50 or the information output device 100 installed in the automobile C1. In addition, information transmitted from a device installed in another movement means may be sequentially stored in the content providing server 200.

The user ID 211 is identification information for identifying a user who uses the content providing service. For example, "U01" is stored in the user ID 211 as the user ID of the user U1.

The position information 212 is information indicating a position of the user corresponding to the user ID 211. For example, a current location of each user is acquired by using various sensors installed in an electronic device carried by each user, for example, a position information acquisition unit, and information in which latitude and longitude of the current location and an acquisition time are associated with each other is transmitted to the content providing server 200 and stored in the position information 212. The current location of each user may be specified based on the position information 212.

The attribute information 213 is information indicating attributes of devices managed by the device information DB 210. For example, when the device managed by the device information DB 210 is a smartphone, the fact is stored, and when the device managed by the device information DB 210 is an on-vehicle device, the fact is stored.

The movement history 214 is information indicating a movement trajectory of the user corresponding to the user ID 211. For example, information in which the position stored in the position information 212 is associated with the acquisition time of the position information is stored in the movement history 214 as a movement trajectory.

The vehicle information 215 is information stored when the device managed by the device information DB 210 is an on-vehicle device, and is various types of information related to the vehicle. For example, a history of detection information of each sensor installed in the automobile C1, for example, an acceleration sensor is stored. In addition, for example, when the automobile C1 is an electric vehicle, information on a charge amount or a remaining electric amount of the automobile C1 is stored. In addition, for example, when the automobile C1 is an engine vehicle, information on a remaining fuel of the automobile C1 is stored.

The image information 216 is information related to an image acquired by an image acquisition unit installed in a device corresponding to the user ID 211, for example, a camera. For example, the captured image acquired by the image acquisition unit is transmitted to the content providing server 200 and stored in the image information 216. For example, a history of each captured image acquired within a predetermined time is stored in the image information 216. It is possible to specify, based on the image information 216, a situation around the electronic device MC1, a situation inside the vehicle of each movement means, a situation outside the vehicle of each movement means, and the like.

The connection information 217 is information indicating a communication history when communication is established between the device managed by the device information DB 210 and another communication device. That is, it is possible to specify, by referring to the connection information 217, the communication device to which the device managed by the device information DB 210 is connected.

The settlement information 218 is information related to a settlement when electronic settlement is executed by the device managed by the device information DB 210. For example, a history of each settlement information acquired within a predetermined time is stored in the settlement information 218. That is, it is possible to specify, by referring to the settlement information 218, a timing at which the device managed by the device information DB 210 is settled and a device that is settled.

### [Content Example of Evaluation Value DB]

FIG. 4 is a diagram schematically illustrating information stored in the content DB 220. The content DB 220 is a database for managing contents to be provided to a user present around the registration location managed by the content providing server 200.

In the content DB 220, position information 222, a content output range 223, movement means 224, and a content 225 are stored in association with a registration location ID 221.

The registration location ID 221 is identification information for identifying a registration location where a content is provided to a user who uses the content providing service. For example, "PL01" is stored in the registration location ID 221 as a registration location ID of objects RO1 to RO3 (see FIG. 8). For example, "PL02" is stored in the registration location ID 221 as a registration location ID of a building B1 (see FIG. 8).

The position information 222 is information indicating a position of the registration location to which the content is provided. For example, latitude and longitude of the registration location are stored in the position information 222. The position of the registration location may be specified based on the position information 222. One piece of position information may be set for one registration location, or a plurality of pieces of position information may be set for one registration location.

The content output range 223 is information indicating a range in which a content corresponding to a registration location is provided. For example, the content output range 223 may be a predetermined range based on a position of a registration location. The predetermined range may be, for example, a range of a circle having a predetermined radius around the position of the registration location, or may be a range of a region related to the registration location, for example, in the case of a park, in the park.

The movement means 224 is information indicating the movement means of the user who uses the content providing service. For example, each movement means assumed to be used by each user is stored in the movement means 224.

The content 225 is a content provided to the user who uses the content providing service. Specifically, a content corresponding to a plurality of movement means 224 is stored in the content 225 for one registration location ID 221.

### [Satisfaction Determination Example of Proximity Condition]

Here, a determination example in which it is determined that the user U1 is present at a registration location where the registration location ID is stored in the registration location ID 221, that is, a satisfaction determination example of a proximity condition will be described. For example, when a proximity condition is satisfied between a device installed at a position of a registration location or the registration location and the electronic device MC1 of the user U1, it is determined that the user U1 is present at the registration location. In this example, it is determined that the user U1 is present at a registration location RL1 based on satisfaction of the proximity condition of the electronic device MC1 of the user U1, but the present invention is similarly applicable to a case where a device other than the electronic device MC1 is used. The device installed at the registration location is, for example, a communication device capable of communicating with the electronic device MC1 using wired communication or wireless communication, or an object including a feature portion installed at the registration location. The object including the feature portion is, for example, the object RO1 (see FIGS. 1 and 8 to 10) including the feature portion FP1.

### [Determination Example Using Position Information]

First, a determination example in which it is determined that a user is present at a registration location using position information will be described.

Specifically, the determination unit 204 (see FIG. 2) of the content providing server 200 extracts the user ID 211 of which the position information 212 in the device information DB 210 is within a predetermined range based on the position information 222 in the content DB 220. That is, the determination unit 204 extracts a device present around the registration location. When the position information 212 of the device information DB 210 includes position information present within the predetermined range, the determination unit 204 determines that the user having the user ID 211 corresponding to the position information is present around the registration location. Determination processing using the position information may be executed by the electronic device MC1. In this case, the electronic device MC1 transmits a content request to the content providing server 200 based on the satisfaction of the proximity condition.

### [Determination Example Using Communication]

Next, a determination example in which it is determined that a user is present at a registration location using communication will be described.

Specifically, the determination unit 204 (see FIG. 2) of the content providing server 200 specifies, based on connection information from a communication device installed at the registration location corresponding to the registration location ID 221 of the content DB 220, an electronic device connected to the communication device using wireless communication or wired communication. For example, when a user ID or device identification information for specifying the connected device is exchanged by communication among devices, the user ID or the device identification information for specifying the connected electronic device may be included in the connection information. The connection information may be transmitted to the content providing server 200 from the electronic device that executes the exchange with the communication device. The determination processing using communication may be executed by the electronic device MC1. In this case, the electronic device MC1 transmits a content request to the content providing server 200 based on the satisfaction of the proximity condition.

For example, it is assumed that a router capable of using Wi-Fi as wireless communication is installed at a registration location. In this case, after predetermined exchange is performed between the router and the electronic device carried by the user, the electronic device is connected to the router. In this manner, when the electronic device is connected to the router, the router transmits connection information related to the connected electronic device to the content providing server 200. Alternatively, the electronic device transmits connection information related to the router to the content providing server 200. Accordingly, the content providing server 200 may grasp that the user carrying the electronic device is present around the registration location where the router is installed.

In addition, for example, it is assumed that a communication device capable of using Bluetooth (registered trademark) as wireless communication is installed at a registration location. For example, the communication device may transmit a beacon signal including registration location information related to the registration location. In this case, when the electronic device carried by the user receives the beacon signal transmitted by the communication device, the electronic device may acquire the registration location information included in the beacon signal. In this manner, when the electronic device receives the beacon signal, the electronic device transmits the registration location information included in the beacon signal to the content providing server 200. Accordingly, the content providing server 200 may grasp that the user carrying the electronic device is present around the registration location where the communication device is installed.

In addition, for example, when a communication device capable of using visible light communication as wireless communication is installed at a registration location, the user may grasp, by using the visible light communication, that the communication device is present around the registration location where the communication device is installed. The visible light communication is wireless communication performed using electromagnetic waves in a visible light band visible to human eyes. In addition, a wavelength and a frequency of LED and a headlight of the automobile C1 are controlled, so that it is possible to output information from the automobile C1, and the automobile C1 may acquire information from the communication device at the registration location using an on-vehicle camera of the automobile C1. Accordingly, the content providing server 200 may grasp that the user U1 riding in the automobile C1 is present around the registration location where the communication device is installed. For example, although a QR code is displayed on an appearance of an object, it is assumed that there is a registration location where the QR code is not desired to be provided in order to maintain beautification of the appearance of the object. Even in such a case, it is possible to perform visible light communication using a street lamp or the like.

### [Determination Example Using Feature Information]

Next, a determination example in which it is determined that a user is present in a registration location using feature information will be described.

Specifically, the user U1 acquires feature information of an object installed at a registration location using the image acquisition unit 306 of the electronic device MC1. For example, the user U1 acquires an image of the feature portion FP1 of the object RO1 using the image acquisition unit 306 of the electronic device MC1. Next, the control unit 302 of the electronic device MC1 acquires, based on the image of the feature portion FP1, access information to the content providing server 200 and identification information related to the registration location where the object RO1 is installed. Next, the control unit 302 of the electronic device MC1 accesses the content providing server 200 based on the access information, and transmits the identification information related to the registration location where the object RO1 is installed. Accordingly, the content providing server 200 may grasp that the user U1 carrying the electronic device MC1 is present around the registration location where the object RO1 is installed.

In this example, the feature portion FP1 is provided in the appearance of the object RO1, but a shape of the object installed at the registration location may be used as the feature information, or a landscape or the like of the registration location may be used as the feature information. In this case, determination information for determining the feature information is stored in the electronic device MC1 or the content providing server 200, and the feature information may be acquired using the determination information. For example, the position information and the shape of the object are registered in advance as the determination information in association with each other. For example, an ABC region and a French image of a temple (registration location) in the region are registered in advance in association with each other. In this case, it is possible to determine that the electronic device MC1 is present in the ABC region based on the position information of the electronic device MC1. In a case where the electronic device MC1 is present in the ABC region, when a French image is included in the captured image acquired by the image acquisition unit 306 of the electronic device MC1, the French image registered in association with the ABC region is compared with the French image included in the captured image, and it is determined whether the French images match. Further, when the French images match, it is possible to determine that the electronic device MC1 is present in the temple.

In this example, an image is used as the feature information, but a specific sound may be used as the feature information. The specific sound is sound information from which specific information may be acquired. For example, the specific sound is output as the feature information from a sound generating device installed at the registration location, and the specific sound is acquired by the sound acquisition unit 305 of the electronic device MC1. Next, the control unit 302 of the electronic device MC1 acquires, based on the specific sound, access information to the content providing server 200 and identification information related to the registration location where the object RO1 is installed. Next, the control unit 302 of the electronic device MC1 accesses the content providing server 200 based on the access information, and transmits the identification information related to the registration location where the object RO1 is installed. Accordingly, the content providing server 200 may grasp that the user U1 carrying the electronic device MC1 is present around the registration location where the object RO1 is installed.

The determination example described above is an example, and another determination method may be used. The determination may be performed by combining the above-described determination methods. For example, the determination accuracy may be further improved by using two or more determination methods.

### [Acquisition Example of Movement Means]

Next, an acquisition example of movement means of a user will be described. First, an example of acquiring movement means of a user based on a user operation will be described.

### [Selection Example of Movement Means Using Electronic Device]

FIG. 5 is a diagram illustrating a transition example of a display screen displayed on the display unit 308 of the electronic device MC1. FIG. 5 illustrates an example in a case where the user U1 walks to a registration location.

A left side of FIG. 5 illustrates an example of a selection screen 310 for selecting the movement means of the user U1. The selection screen 310 is displayed when the proximity condition between the electronic device MC1 and the registration location is satisfied. In this example, the movement means of the user U1 is selected by a manual operation, but when the movement means of the user U1 is automatically estimated, display of the selection screen 310 is omitted.

Selection buttons 311 to 319 for selecting the movement means of the user U1 are displayed on the selection screen 310. The user U1 performs a pressing operation of pressing a selection button corresponding to his/her movement means among the selection buttons 311 to 319. In FIG. 5, since the user U1 walks to the registration location, the user U1 performs a pressing operation of pressing the selection button 311. When the pressing operation is performed, the control unit 302 transmits movement means information indicating the movement means corresponding to the selection button 311 to the content providing server 200. By receiving the movement means information, the content providing server 200 may acquire the movement means of the user U1. Further, the content providing server 200 provides the electronic device MC1 with a content corresponding to the movement means of the user U1. The electronic device MC1 outputs the content provided from the content providing server 200. For example, a content display screen 320 illustrated on a right side of FIG. 5 is displayed on the display unit 308.

The right side of FIG. 5 illustrates an example of the content display screen 320 that displays the content according to the movement means selected according to the selection operation of the selection buttons 311 to 319 on the selection screen 310.

The content display screen 320 includes an image display region 321, a message display region 324, and a movement means display region 325. In the image display region 321, a human figure image 322 corresponding to the movement means selected using the selection screen 310 and a guide image 323 for guiding a registration location to be a display target of a next content related to the current registration location are displayed, in a superimposed manner, on the captured image acquired by the image acquisition unit 306.

In the message display region 324, information related to the current registration location, information related to a position and a direction of the registration location which is the display of the next content related to the current registration location, and the like are displayed as a message.

In the movement means display region 325, information indicating the movement means selected using the selection screen 310 is displayed. FIG. 5 illustrates an example in which a character 326 of "for pedestrian" and a sign image 327 indicating a pedestrian are displayed in the movement means display region 325. By viewing the display of the movement means display region 325, the user U1 can easily grasp that the content displayed on the electronic device MC1 is "for pedestrian". In this manner, by notifying the user whether to be content output to which movement means during content output or before content output, it is possible to easily grasp the content that the user U1 is suitable for the movement means even when the movement means cannot be correctly estimated.

### [Estimation Example of Movement Means Using Position Information and the like]

Next, an example of estimating movement means of the user U1 using the position information acquired by the position information acquisition unit 304 of the electronic device MC1 will be described.

FIG. 6 is a simplified diagram illustrating movement means that may be used by the user U1. FIG. 6 illustrates, as an example of the movement means, the airplane AP1 flying in the sky, the train TR1 traveling on a railway track RP1, the automobile C1 traveling on a roadway RD1, the bus BU1, the motorcycle M1, the bicycle BC1, the user U1 walking on a sidewalk SW1 installed along the roadway RD1, and the ship SH1 moving in a river RV1.

### [Estimation Example Using Movement History]

The estimation unit 205 (see FIG. 2) may acquire the movement history of the electronic device MC1 using the position information 212 and the movement history 214 of the device information DB 210. Here, the estimation unit 205 selects a route matching the movement history of the electronic device MC1 from among routes on a map based on the movement history of the electronic device MC1 and map information stored in the map information DB of the storage unit 203. For example, when the movement history of the electronic device MC1 matches the railway track RP1, the estimation unit 205 estimates that the movement means of the user U1 carrying the electronic device MC1 is a train. When the movement history of the electronic device MC1 matches the river RV1, the estimation unit 205 estimates that the movement means of the user U1 carrying the electronic device MC1 is a ship. When the movement history of the electronic device MC1 matches the sidewalk SW1, the estimation unit 205 estimates that the movement means of the user U1 carrying the electronic device MC1 is walking. When the movement history of the electronic device MC1 matches the roadway RD1, the estimation unit 205 estimates that the movement means of the user U1 carrying the electronic device MC1 is a vehicle traveling on the roadway RD1. In this case, the type of the vehicle traveling on the roadway RD1 may be estimated using the following speed or the like.

### [Estimation Example Using Movement Distance or Movement Speed]

The estimation unit 205 (see FIG. 2) may calculate a movement speed of the electronic device MC1 based on the position information 212 and the movement history 214 of the device information DB 210. For example, the estimation unit 205 may calculate, using position information acquired at predetermined intervals, for example, an interval of one minute, a movement distance per unit time, for example, one minute, among the position information. In addition, for example, the estimation unit 205 may calculate, using position information acquired at predetermined intervals, the movement distance among the position information, and calculate the movement speed by dividing the movement distance by the interval. Here, the estimation unit 205 calculates at least one of the movement distance and the movement speed of the user U1 carrying the electronic device MC1 using the position information of the electronic device MC1, and estimates the movement means of the user U1 based on the movement distance or the movement speed.

For example, when the movement distance per minute is less than TH1m, the estimation unit 205 estimates that the movement means of the user U1 is walking. When the movement distance per minute is TH1m or more and less than TH2m, the estimation unit 205 estimates that the movement means of the user is a bicycle. When the movement distance per minute is TH2m or more and less than TH3m, the estimation unit 205 estimates that the movement means of the user is at least one of an automobile, a motorcycle, and a bus. When the movement distance per minute is TH3m or more, the estimation unit 205 estimates that the movement means of the user is a train. When the movement distance per minute is TH4m or more, the estimation unit 205 estimates that the movement means of the user is an airplane. The estimation unit 205 may estimate the movement means based on an average value (average movement distance) of the calculated movement distance (movement distance per minute). TH1 to TH4 are threshold values for estimating the movement means of the user, and are values that may be set as appropriate based on experimental data or the like. For example, TH1 may be set to a value of about several tens of meters, and TH2 to TH4 (where TH2<TH3<TH4) may be set to a value of about several hundreds of meters.

The movement means may be estimated based on a maximum speed. For example, when the maximum speed is less than TH11 km/h, the movement means can be determined to be walking, and when the maximum speed is TH11 km/h or more and less than TH12 km/h, the movement means can be determined to be a bicycle. In addition, for example, when the maximum speed is TH12 km/h or more and less than TH13 km/h, the movement means can be determined as a bus, and when the maximum speed is TH13 km/h or more, the movement means can be determined as a train. For example, when the maximum speed is TH14 km/h or more, the movement means can be determined to be an airplane. TH11 to TH14 are threshold values for estimating the movement means of the user, and are values that may be set as appropriate based on experimental data or the like. For example, TH11 can be set to a value of about several km/h, and TH12 to TH14 (where TH12<TH13<TH14) can be set to a value of about several tens km/h.

The estimation unit 205 may calculate an acceleration of the user U1 carrying the electronic device MC1 using the position information of the electronic device MC1. It addition, it is also possible to acquire an acquisition history of an acceleration sensor mounted on the electronic device MC1. For example, when the vehicle information 215 of the device information DB 210 includes information of the acceleration sensor, the information of the acceleration sensor may be used. Here, features of each movement means such as walking, a bicycle, a bus, and a train may be set in advance, and the estimation unit 205 may estimate the movement means of the user U1 based on a feature of the acceleration of the electronic device MC1, for example, a history of the acceleration.

### [Estimation Example Using Communication]

The estimation unit 205 (see FIG. 2) may estimate the movement means of the user U1 carrying the electronic device MC1 based on communication between a communication device installed in the movement means and the electronic device MC1.

For example, it is assumed that when the user U1 is riding in the automobile C1, the electronic device MC1 is connected to a communication device of the automobile C1, for example, the control device 50 or the information output device 100 using wireless communication, for example, Wi-Fi or Bluetooth. In this case, the control unit 302 of the electronic device MC1 stores, in the storage unit 303, a connection history indicating connection to the communication device of the automobile C1 using wireless communication, and transmits the connection history to the content providing server 200 at a predetermined timing. Alternatively, the communication device of the automobile C1 may store, in the storage unit, a connection history indicating connection to the electronic device MC1 using wireless communication and transmit the connection history to the content providing server 200 at a predetermined timing. These connection histories are stored in the connection information 217 of the device information DB 210. A type of the automobile C1 may be determined based on the attribute information 213 of the device information DB 210. Accordingly, the content providing server 200 may grasp that the movement means of the user U1 is the automobile C1.

In addition, for example, it is assumed that when the user U1 is on movement means in which a communication device connectable to the electronic device MC1 using wireless communication is installed, for example, the train TR1, the airplane AP1, the bus BU1, or the ship SH1, the electronic device MC1 is connected to the communication device. In this case, similarly, the control unit 302 of the electronic device MC1 stores, in the storage unit 303, connection to a communication device of each movement means using wireless communication, and transmits the connection to the content providing server 200 at a predetermined timing. Alternatively, the communication device of each movement means may store, in the storage unit, connection to the electronic device MC1 using wireless communication and transmit the connection to the content providing server 200 at a predetermined timing.

### [Estimation Example Using Settlement System and Settlement Means]

When the user U1 gets in public movement means using a settlement function of the electronic device MC1, the estimation unit 205 (see FIG. 2) may estimate the movement means of the user U1 carrying the electronic device MC1 based on settlement information. The settlement function is, for example, a function corresponding to an IC card ticket having an electronic money function handled by a railway company or a bus company, and may be installed as, for example, an application of a smartphone. For example, an ID of the railway company or the bus company may be associated with the user ID of the user U1, and the content providing server 200 may acquire boarding information of the user U1 based on the user ID of the user U1. Alternatively, every time the user U1 gets on the movement means of the railway company or the bus company, the electronic device MC1 may store boarding information related to the movement means on which the user U1 gets on, and transmit the boarding information to the content providing server 200 at a predetermined timing. The information is stored in the settlement information 218 of the device information DB 210. Accordingly, the content providing server 200 may grasp the movement means that the user U1 settled in the past.

In addition, the settlement function is, for example, a function corresponding to settlement means by a credit card company or an online settlement service company, and for example, may be installed as an application of a smartphone. For example, an ID of the credit card company or the online settlement service company may be associated with the user ID of the user U1, and the content providing server 200 may acquire the boarding information of the user U1 based on the user ID of the user U1.

### [Estimation Example Using Image or Sound]

The estimation unit 205 (see FIG. 2) may estimate the movement means of the user U1 carrying the electronic device MC1 based on the image acquired by the image acquisition unit 306 of the electronic device MC1. For example, when an image around the user U1 is acquired by the image acquisition unit 306 of the electronic device MC1, image information is stored in the storage unit 303 and transmitted to the content providing server 200 at a predetermined timing. The image information is stored in the image information 216 of the device information DB 210. Since the content providing server 200 may specify the route along which the user U1 moves based on the image around the user U1, the content providing server 200 may estimate the movement means of the user U1 based on the route. For example, when the image around the user U1 is the sidewalk SW1, it is possible to estimate that the movement means of the user U1 is walking. When the image around the user U1 is sea or river, it is possible to estimate that the movement means of the user U1 is a ship. When the image around the user U1 is along the railway track RR1, it is possible to estimate that the movement means of the user U1 is a train.

When a handle is included in the image acquired by the image acquisition unit 306, it is possible to estimate the movement means such as an automobile, a motorcycle, or a bicycle based on a shape of the handle. When the image acquired by the image acquisition unit 306 includes an object in a vehicle compartment such as a front window or a dashboard, it is possible to estimate that the movement means is an automobile.

The estimation unit 205 may estimate the movement means of the user U1 carrying the electronic device MC1 based on the sound acquired by the sound acquisition unit 305 of the electronic device MC1. For example, when the sound around the user U1 is acquired by the sound acquisition unit 305 of the electronic device MC1, the sound information is stored in the storage unit 303 and transmitted to the content providing server 200 at a predetermined timing. The sound information is stored in the device information DB 210. Since the content providing server 200 may specify the environment in which the user U1 moves based on the sound around the user U1, it is possible to estimate the movement means of the user U1 based on the environment. For example, when the sound around the user U1 is a quiet sound, it is possible to estimate that the movement means of the user U1 is walking. When the sound around the user U1 is a sound emitted by a specific vehicle, it is possible to estimate that the movement means of the user U1 is the vehicle.

### [Other Estimation Methods]

Here, other estimation methods will be described. For example, a communication device can be installed at an entrance and exit for a user to enter or exit a registration location or a facility. The movement means of the user U1 can be estimated using communication between the communication device and the electronic device MC1.

In addition, the electronic device MC1 of the user U1 is notified of or displayed with various kinds of information according to the movement means. For example, when the user U1 uses a bus or a train, a time table is often displayed on the display unit 308 of the electronic device MC1. When the user U1 is using the automobile C1, a traffic situation of a return route of the automobile C1 is often displayed on the display unit 308 of the electronic device MC1. When the user U1 is using a bicycle or a motorcycle, weather information is often displayed on the display unit 308 of the electronic device MC1. When the user U1 is using a taxi, a dispatch application or the like is often activated in the electronic device MC1. Here, it is possible to estimate the movement means of the user U1 using a display history of the electronic device MC1 and an activation history of the application.

As described above, entry and exit may be executed for a communication device installed at a registration location or an entrance and exit of a facility. For example, when the user U1 performs an entry or exit operation using the communication device, it is possible to display appropriate information on the electronic device MC1 of the user U1 according to the movement means.

In addition, for example, a communication device can be installed at an entrance and exit of a restaurant as the registration location. The movement means of the user U1 can be estimated using communication between the communication device and the electronic device MC1. The communication device is used when the user U1 performs electronic settlement using the electronic device MC1 after a meal in the restaurant. For example, when the movement means of the user U1 is walking, only the price of the meal of the user U1 is displayed on the electronic device MC1 and charged. On the other hand, when the movement means of the user U1 is the automobile C1 and the automobile C1 is parked in a parking lot, it is possible to add the price of the parking lot to the price of the meal of the user U1 and cause the electronic device MC1 to display and charge the sum.

The above-described estimation method of the movement means is an example, and other estimation methods may be used. In addition, the movement means may be estimated by combining the above-described estimation methods. For example, the movement means of the user may be determined on condition that the movement means estimated by two or more estimation methods match. Accordingly, it is possible to improve the estimation accuracy of the movement means.

### [Estimation Example of Main Movement Means]

FIG. 7 is a simplified diagram illustrating a relation example between routes R1 to R5 to the registration location RL1 and main movement means. It is assumed that the route R1 from the nearest airport APP1, the route R2 from the nearest station ST1, the route R3 from the nearest ship port SP1, the route R4 from the nearest bus stop BT1, and the route R5 from the parking lot P1 are present as routes toward the registration location RL1. In FIG. 7, it is assumed that each of the routes R1 to R5 may allow movement only by walking. In this case, it is possible to estimate that all the movement means of the user U1 who arrives at the registration location RL1 are walking. However, the main movement means of the user U1 may be estimated in consideration of the movement means used by the user U1 in front of each of the routes R1 to R5. For example, the movement means of the user U1 may be estimated according to a content.

For example, the main movement means of the user U1 can be selected based on the movement distance of the user U1, and the content can be determined based on the main movement means. For example, the movement means having the longest movement distance among distances from the home of the user U1 to the registration location RL1 can be selected as the main movement means. For example, in a case where the distance from the home of the user U1 to the registration location RL1 is 10 km, when walking is for 1 km and the train is for 9 km, the train is selected as the main movement means.

For example, the main movement means of the user U1 can be selected based on the movement time of the user U1, and the content can be determined based on the main movement means. For example, the movement means having the longest movement time among the movement time from the home of the user U1 to the registration location RL1 can be selected as the main movement means. For example, in a case where the movement time from the home of the user U1 to the registration location RL1 is 1 hour, when walking is for 10 minutes, the bus is for 40 minutes, and the train is for 10 minutes, the bus is selected as the main movement means.

For example, the main movement means of the user U1 can be selected based on movement cost of the user U1, and the content can be determined based on the main movement means. For example, movement means having the highest movement cost among the movement costs from the home of the user U1 to the registration location RL1 can be selected as the main movement means. For example, in a case where the movement cost from the home of the user U1 to the registration location RL1 is 1,000 yen, when walking costs 0 yen, the bus costs 800 yen, and the train costs 200 yen, the bus is selected as the main movement means.

The selection method of the main movement means is an example, and movement means of the user may be selected by another method. The selection method of the movement means may be changed according to the content provided to the user.

A priority order of the movement means may be set in advance, and the movement means of the user may be selected according to the priority order. For example, it is assumed that a train for the first place, an automobile for the second place, a bus for the third place, and walking for the fourth place are set as the priority order of movement means. In this case, when the user comes to the registration location using walking, a bus, or a train, a train for the first place is selected as the movement means of the user according to the priority order. When the selected movement means is canceled by a user operation, another movement means of the user is selected according to the priority order.

### [Relation Example Between Registration Location and Movement Means of User]

FIG. 8 is a simplified diagram illustrating a relation between the registration location managed by the content providing server 200 and the movement means of the user U1. FIG. 8 illustrates an example in which the objects RO1 to RO3 and the building B1 are registration locations. In addition, FIG. 8 illustrates a case where the user U1 walks toward a parking lot P11 in which the objects RO1 to RO3 are installed and a case where the user U1 rides in the automobile C1 toward the parking lot P11. The parking lot P11 is assumed to be a parking lot provided to a user who uses the building B1. The building B1 is, for example, various facilities where people gather, such as a museum and an exhibition hall.

The objects RO1 to RO3 are charging stations for charging an electric vehicle using a charging cable. The objects RO1 to RO3 are facilities installed at registration locations managed by the content providing server 200. A vehicle C2 is a vehicle that is being charged using a charging facility RO2, and vehicles C3 and C4 are vehicles parked in the parking lot P11.

In addition, it is assumed that the user U1 travels on a roadway R11 when the user U1 rides in the automobile C1 toward the parking lot P11, and walks on a sidewalk R12 when the user U1 walks toward the parking lot P11. In this case, the content providing server 200 may estimate the movement means of the user U1 according to a movement history until the user U1 heads for the parking lot P11. The movement history of the user U1 may be acquired from the movement history 214 of the device information DB 210.

### [Content Output Example when Movement Means is Walking]

FIG. 9 is a diagram illustrating an output example of the content provided to the user U1 by the content providing server 200 when the movement means of the user U1 is walking. Here, it is assumed that the user U1 carries the electronic device MC1.

It is assumed that the user U1 who walks on the sidewalk R12 illustrated in FIG. 8 moves to the vicinity of the object RO1 in order to use the building B1. In this manner, it is assumed that after the user U1 moves to the vicinity of the object RO1, the user U1 captures an image of the feature portion FP1 of the object RO1 using the image acquisition unit 306 of the electronic device MC1. In this case, the image of the feature portion FP1 is acquired by the image acquisition unit 306 of the electronic device MC1, and the image of the feature portion FP1 is output to the control unit 302 of the electronic device MC1. The control unit 302 may acquire various kinds of information based on the feature portion FP1 by performing predetermined image processing on the image of the feature portion FP1.

For example, when the feature portion FP1 is constituted by a QR code, the control unit 302 may acquire access information to the content providing server 200 and identification information for identifying the object RO1 based on the QR code acquired by the image acquisition unit 306 of the electronic device MC1. In this case, the control unit 302 accesses the content providing server 200 based on the acquired access information, and transmits the identification information of the object RO1, for example, the registration location ID. Accordingly, the content providing server 200 can grasp that the electronic device MC1 is present around the object RO1. In this case, the content providing server 200 can grasp that the movement means is walking based on the movement history 214 (see FIG. 3) of the electronic device MC1. Alternatively, the content providing server 200 may estimate that the movement means is walking based on the transmission information from the electronic device MC1.

Next, the content providing server 200 extracts the registration location ID 221 matching the identification information of the object RO1 from the registration location ID 221 of the content DB 220. Then, the content providing server 200 extracts the content 225 related to walking from the movement means 224 of the content DB 220 associated with the registration location ID 221 matching the identification information of the object RO1.

The content providing server 200 transmits the extracted content to the electronic device MC1. When the content is received from the content providing server 200, the control unit 302 of the electronic device MC1 outputs the content from an output unit, for example, the display unit 308 and the sound output unit 309. For example, it is possible to display a human figure image AB1, in a superimposed manner, on the image acquired by the image acquisition unit 306, as illustrated in FIG. 9. In this example, it is possible to cause the display unit 308 to display the human figure image AB1 in a posture of sitting on an upper side of the building B1. In addition, the human figure image AB1 may describe the object RO1 and the building B1, and may output sound information S1 that guides the user to advance to the building B1. In addition, for example, a video content such as a time required to reach a surrounding tourist site or a special product may be output. In this case, since it is possible to grasp that the user U1 walks here, it is also possible to guide a location where the user U1 can walk, for example, a registration location within a range of about 3 km.

In the example illustrated in FIG. 9, since the user U1 is in a parking lot, a message such as "There comes a car, it's dangerous." may be output, or a message such as "Please come here by a car next time." may be output. In addition, a content for guiding a near route to another registration location, a content for guiding another registration location within a range in which the user U1 can walk, or the like may be output.

### [Content Output Example when Movement Means is Vehicle]

FIG. 10 is a diagram illustrating an output example of the content provided to the user U1 by the content providing server 200 when the movement means of the user U1 is the automobile C1. Here, it is assumed that the automobile C1 is an electric vehicle. In addition, in FIG. 10, a configuration example of a vehicle compartment of the automobile C1 when viewed from a rear side in a front-rear direction of the automobile C1 is simplified and illustrated. In FIG. 10, illustration other than the dashboard 2, the handle 3, the windshield 4, and the information output device 100 is omitted for ease of description.

It is assumed that the user U1 who gets in the automobile C1 and travels on the roadway R11 illustrated in FIG. 8 parks the automobile C1 in the vicinity of the object RO1 in order to use the object RO1 and charge. In this manner, when the automobile C1 is parked in the vicinity of the object RO1, the object RO1, the building B1, and the like are visible from the windshield 4 as illustrated in FIG. 10.

As illustrated in FIG. 1, the feature portion FP1 is provided in the appearance of the object RO1. When the feature portion FP1 is included in an image capturing range of the image acquisition unit installed in the automobile C1, for example, an exterior camera, the image of the feature portion FP1 is acquired by the image acquisition unit of the automobile C1, and the image of the feature portion FP1 is output to the information output device 100. The information output device 100 may acquire various kinds of information based on the feature portion FP1 by performing predetermined image processing on the image of the feature portion FP1.

Access to the content providing server 200 by the information output device 100 and transmission of the identification information of the object RO1 are the same as those in the example illustrated in FIG. 9. Accordingly, the content providing server 200 can grasp that the automobile C1 is present around the object RO1. In this case, the content providing server 200 can grasp that the movement means is an automobile based on the movement history 214 (see FIG. 3) of the information output device 100. Alternatively, the content providing server 200 may estimate that the movement means is an automobile based on the transmission information from the information output device 100.

Next, the content providing server 200 extracts the registration location ID 221 matching the identification information of the object RO1 from the registration location ID 221 of the content DB 220. Then, the content providing server 200 extracts the content 225 related to an automobile from the movement means 224 of the content DB 220 associated with the registration location ID 221 matching the identification information of the object RO1.

The content providing server 200 transmits the extracted content to the information output device 100. When the content is received from the content providing server 200, the control unit of the information output device 100 outputs the content from the output unit, for example, the display unit 110 or the sound output unit. For example, it is possible to display, in a superimposed manner, a human figure image AB2 on the image acquired by the image acquisition unit, as illustrated in FIG. 10. In this example, it is possible to cause the display unit 110 to display the human figure image AB2 in a posture of sitting on an upper side of the object RO1. In addition, the human figure image AB2 may describe the object RO1 and the building B1, and may output sound information S2 that guides a charging facility. In addition, a video content of the surrounding tourist site may be output assuming that the user U1 does not go out of the automobile C1. For example, a video content such as a time required to reach a surrounding tourist site or a specialty may be output. In this case, since it is possible to grasp that the user U1 travels by the automobile C1, it is possible to guide a remote location where the user U1 cannot arrive by walking or a bicycle, for example, a registration location within a range of about 20 km. In addition, the content providing server 200 may grasp a charge amount of the automobile C1 based on the vehicle information 215 of the device information DB 210. Here, the content may be output in consideration of the charge amount of the automobile C1. For example, it is possible to guide a location where the vehicle can travel with the current charge amount or to introduce the next charge spot in consideration of the current charge amount.

In addition, the content providing server 200 may acquire congestion information around the registration location via the network 20. Here, the content providing server 200 can guide or introduce a location which is not congested and can only be reached by a car from a location around the registration location based on the congestion information around the registration location. In addition, it is possible to promote use of a charging facility by providing an attractive content only to a person who uses the charging facility.

In the example illustrated in FIG. 10, satisfaction of a proximity condition is determined using the feature portion FP1, but satisfaction of a proximity condition may be determined by another method. For example, satisfaction of a proximity condition of the automobile C1 may be determined based on exchange, when a charging cable of the object RO1 is connected to the automobile C1, between the object RO1 and the automobile C1 via the charging cable. That is, when the charging cable of the object RO1 is connected to the automobile C1, in order to perform communication of whether charging may be performed between the automobile C1 and the object RO1, that is, the charging facility, it is possible to determine, using the communication, that direct communication between the object RO1 and the automobile C1 is established.

A content using virtual reality (VR) or augmented reality (AR) may be provided. In addition, as the content to be provided, a content including details related to a registration location can be used. For example, a local content of a region related to a registration location, a content introducing local items, a local avatar, or a local mascot character can be used. The local content is, for example, an image in which a predetermined character is graphically identified. In addition, it is also possible to perform AR display, AR display, or sound output. In this manner, by changing the local content to be provided according to the movement means, a user who wants to view all the local contents frequently visits the registration location, and thus the registration location may be activated. In addition, since each movement means is used, it is possible to promote use of each movement means.

Here, a difference in content between a case where the movement means is an automobile and a case where the movement means is walking will be described. Even in a case where the movement means is an automobile and walking, it is possible to make display forms of feature portions, for example, portions other than the human figure images AB1 and AB2 the same. However, when the movement means is an automobile, it is assumed that the user is in the vehicle compartment for a long time. Here, when the movement means is an automobile, it is also possible to provide a local content of completion with the user in the vehicle compartment. For example, it is also possible to display, in a superimposed manner, a predetermined image on a landscape that may be seen from an automobile. For example, when the gaze of the user may be detected, a predetermined image related to a landscape corresponding to the gaze can be displayed on the landscape in a superimposed manner. In addition, when the electronic device MC1 may be viewed in the vehicle compartment, the predetermined image can be displayed, in a superimposed manner, on the image acquired by the image acquisition unit 306 of the electronic device MC1. Here, the predetermined image may be a description image of a building, a mountain, or the like that may be seen from the registration location.

When the movement means is an automobile, a cruising distance varies depending on a remaining fuel or a remaining charge amount. Therefore, it is also possible to provide a content that introduces the remaining fuel or a remaining electric amount. In addition, it is also possible to change a candidate of the next registration location according to the remaining fuel or the remaining electric amount, and it is possible to provide information according to the situation of the user.

In addition, when the movement means is walking, the user can easily move several tens of meters, and therefore, it is also possible to introduce an object several tens of meters ahead. In this case, when the user approaches the object and an image of the object is acquired by the image acquisition unit 306 of the electronic device MC1, a predetermined image can be displayed on the object in a superimposed manner. The predetermined image can be a description image related to the object.

In this manner, since it is possible to provide different contents according to the movement means, it is possible to provide the user with information on the local area suitable for the movement means. For example, an information provider may appropriately introduce information in consideration of the movement means. In this case, it is possible to transmit the information on the local area widely and shallowly, or to transmit the information narrowly and deeply. Although FIGS. 9 and 10 illustrate examples in which both sound information and image information are output, one of the sound information and the image information may be output.

### [Output Example of Content according to Movement Means]

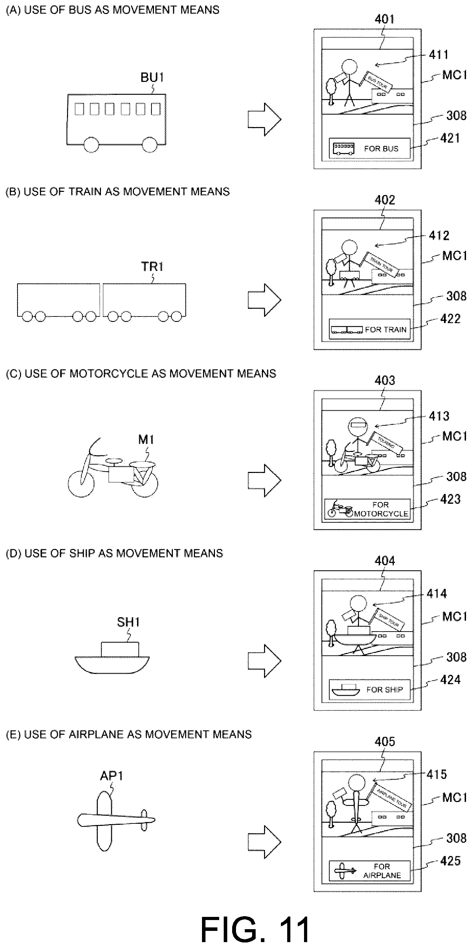

FIG. 11 is a diagram illustrating an output example of a content according to the movement means of the user U1. (A) of FIG. 11 illustrates a content output example when the movement means of the user U1 is the bus BU1, (B) of FIG. 11 illustrates a content output example when the movement means of the user U1 is the train TR1, (C) of FIG. 11 illustrates a content output example when the movement means of the user U1 is the motorcycle M1, (D) of FIG. 11 illustrates a content output example when the movement means of the user U1 is the ship SH1, and (E) of FIG. 11 illustrates a content output example when the movement means of the user U1 is the airplane AP1.

As illustrated in (A) to (E) of FIG. 11, on the content display screen, human figure images 411 to 415 corresponding to the movement means of the user U1 are displayed, in a superimposed manner, on the captured image in image display regions 401 to 405. Characters and signs corresponding to the movement means of the user U1 are displayed in movement means display regions 421 to 425. For example, it is possible to output a content for guiding a registration location using the human figure images 411 to 415.

The contents illustrated in FIG. 11 are examples, and another content may be output according to the movement means of the user U1. For example, the pose or clothes of the same human figure image may be changed according to the movement means of the user U1. In addition, when the registration location is a shop, the product to be introduced may be changed according to the movement means of the user U1.

In addition, the number of times of arrival at the same registration location may be stored for each movement means in association with the user ID 211 of the device information DB 210, and the output of the content may be changed according to an increase in the number of times. For example, at the time of arrival at a charging facility which is a registration location A by the automobile C1, it is possible to display a character indicating that "The charging time is 30 minutes, please go to the park in the back to pass your time.", and a human figure image representing the character. In addition, for example, at the time of arrival at the registration location A for the third time by the automobile C1, it is possible to display a character indicating "Glad to see you come here again by car." and a human figure image representing the character. In addition, the character and the figure image may be output by sound.

In addition, the registration location to be guided next to the current registration location may be changed according to the movement means of the user U1. For example, it is assumed that a plurality of registration locations A to E present in a relatively close range are present and the registration location A is an entrance. In this case, for example, when the movement means is an automobile, it is possible to guide the registration location A → C → E, and when the movement means is walking, it is possible to guide the registration location A → B → D. In this manner, the priority order according to the movement means is set in advance as the next candidate such as the registration location A, and the next candidate is provided to the user based on the priority order and the movement means. The next candidate may be appropriately set based on, for example, the distance, the time, and the state of the movement route. When the next candidate is canceled by a user operation, another next candidate is provided according to the priority order.

In addition, for example, when the movement means is an automobile, a road from the current registration location is wide, and a registration location where the parking lot is present can be introduced as the next candidate. In this case, even a location distant from the current registration location may be introduced.

In addition, for example, when the movement means is walking, a registration location present in a movement range (for example, less than several kilometers) by walking can be introduced as the next candidate. In this case, it is possible to introduce a narrow road from the current registration location.

In addition, for example, when the movement means is a motorcycle, even a registration location where a road from the current registration location is narrow and there is no parking lot can be introduced as the next candidate. In addition, it is also possible to introduce a location distant from the current registration location.

In addition, for example, when the movement means is a bicycle, a registration location present in a movement range (for example, less than 10 km) of the bicycle where a road from the current registration location is flat can be introduced as the next candidate. In this case, it is possible to introduce even a location distant from a location introduced by walking.

In addition, it is also assumed that a plurality of registration locations A to E present in a relatively close range are present and the registration location A is an entrance. In this case, for example, when the registration location is moved without following the guidance according to the movement means (for example, in the case of automobile, registration location A → C → E), it may be set that a predetermined content output according to the movement means is not performed. In this case, the pleasure of movement according to the guidance increases. Accordingly, the user U1 can easily enjoy the movement route corresponding to the movement means and the content corresponding to the movement means.

### [Content Output Example at Locations other than Registration Location]

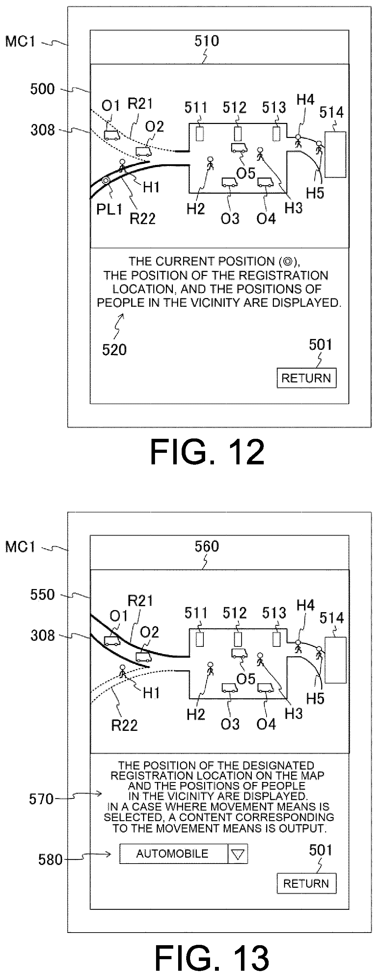

A content output example when the user U1 is present around a registration location is described above. Here, although the user U1 is moving to the vicinity of a registration location, since the proximity condition is not satisfied, it is assumed that a content of the registration location is not output. In addition, when the user U1 is scheduled to go to the registration location, it is assumed that the user U1 wants to know the situation of the registration location. Here, FIGS. 12 and 13 illustrate examples in which a content is output when the user U1 is not present around the registration location.

### [Content Output Example at Locations Close to Registration Location]

FIG. 12 is a diagram illustrating an example of a content display screen 500 displayed on the display unit 308 of the electronic device MC1. The content display screen 500 is an example of the content displayed when the user U1 is present in the vicinity of a registration location and the proximity condition is not satisfied. The example illustrated in FIG. 12 illustrates a case where the objects R01 to R03 and the building B1 are installed at registration locations as in the example illustrated in FIG. 8. In addition, it is assumed that the user U1 is walking on the sidewalk R12 (see FIG. 8). The content display screen 500 may be automatically displayed when the user U1 is assumed to go to the registration location, or may be displayed by a manual operation of the user U1.

A return button 501, a map display region 510, and a message display region 520 are displayed on the content display screen 500. The return button 501 is a button to be pressed at the time of returning to an immediately preceding display screen.

In the map display region 510, a current location sign PL1 indicating a current location of the user U1, device signs O1 to O5 and H1 to H5 indicating positions of other devices present around the user U1, registration location signs 511 to 514 indicating positions of registration locations, and movement routes R21 and R22 to the registration locations are displayed on a map around the user U1 in a superimposed manner. The content provision processing unit 206 of the content providing server 200 may display the map around the user U1 and the movement routes R21 and R22 based on the position information 212 of the device information DB 210. In addition, the content provision processing unit 206 of the content providing server 200 may display the current location sign PL1, and the device signs O1 to O5 and H1 to H5 based on the position information 212 of the device information DB 210. In addition, the content provision processing unit 206 of the content providing server 200 may display the registration location signs 511 to 514 based on the position information 222 of the content DB 220.

In this manner, by displaying the device signs O1 to O5 and H1 to H3, the registration location signs 511 to 514, and the movement routes R21 and R22 on the map around the registration location where the user U1 is assumed to go, the user U1 can easily grasp the registration location, the route toward the registration location, congestion on the route, and the like.

When the movement means of the user U1 can be estimated, only a movement route corresponding to the movement means of the user U1 among the movement routes to the registration location may be displayed. FIG. 12 illustrates an example in which, since the movement means of the user U1 is walking, between the movement routes R21 and R22 to the registration location, the movement route R22 corresponding to the movement means (walking) of the user U1 is displayed by a thick line, the movement route R21 is displayed by a dotted line, and the movement route R22 corresponding to the movement means (walking) of the user U1 is highlighted. Accordingly, the user U1 can easily grasp the route toward the registration location.

### [Content Output Example related To Registration Location Designated by User Operation]

FIG. 13 is a diagram illustrating an example of a content display screen 550 displayed on the display unit 308 of the electronic device MC1. The content display screen 550 is an example of a content for displaying a map designated by a manual operation of the user U1. Since the example illustrated in FIG. 13 is obtained by changing a part of FIG. 12, a difference from FIG. 12 will be mainly described here. The same parts as those in FIG. 12 are denoted by the same reference numerals, and the description thereof is omitted.

A map display region 560, a message display region 570, and a movement means selection region 580 are displayed on the content display screen 550. In the map display region 560, the device signs O1 to O5 and H1 to H5, the registration location signs 511 to 514, and the movement routes R21 and R22 are displayed, in a superimposed manner, on the map designated by the manual operation of the user U1. That is, FIG. 13 is different from FIG. 12 in that the current location sign PL1 is not displayed.

The movement means selection region 580 is a region for selecting movement means used when the user U1 moves to the registration location displayed in the map display region 560. By the user U1 selecting the movement means in the movement means selection region 580, a content corresponding to the selected movement means may be output.

In addition, at least one of a plurality of contents set for the registration location may be displayed on the content display screen 550, or may be displayed on another display screen. In addition, at least one of the plurality of contents may be output as a sound. A movement range or a movement route corresponding to the movement means related to the registration location may be displayed on the content display screen 550 or may be displayed on another display screen. The movement range according to the movement means related to the registration location is a range in which it is assumed that the user who comes to the registration location included in the map designated by the manual operation of the user U1 moves. For example, when the movement means of the user U1 is walking, a relatively narrow range is set, and when the movement means of the user U1 is an automobile, a relatively wide range is set. In addition, the movement route according to the movement means related to the registration location is a route along which it is assumed that the user who comes to the registration location included in the map designated by the manual operation of the user U1 moves. For example, when the movement means of the user U1 is walking, a route along which the user U1 can move by walking is set, and when the movement means of the user U1 is an automobile, a route along which the user U1 can move by an automobile is set.

In this manner, even when the user U1 is not present in the vicinity of the registration location, the device signs O1 to O5 and H1 to H5, the registration location signs 511 to 514, and the movement routes R21 and R22 can be displayed on the map designated by the user U1. Accordingly, the user U1 can easily grasp the registration location, the route toward the registration location, congestion on the route, and the like.

When the movement means of the user U1 is designated, only a movement route corresponding to the movement means of the user U1 among movement routes to the registration location may be displayed. For example, when the movement means of the user U1 is an automobile, only the movement route R21 corresponding to the movement means (automobile) of the user U1 can be displayed between the movement routes R21 and R22 to the registration location. Accordingly, the user U1 can easily grasp the route toward the registration location.

### [Operation Example of Electronic Device]

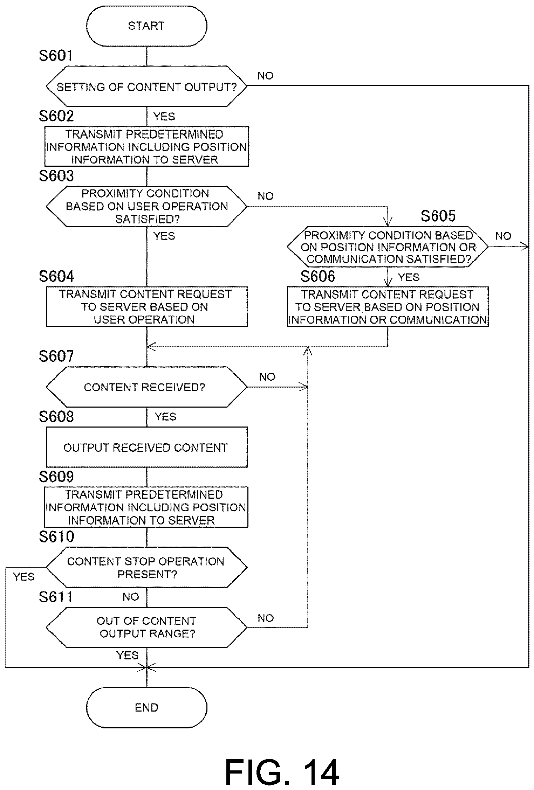

FIG. 14 is a flowchart illustrating an example of content output processing in the electronic device MC1. The content output processing is executed by the control unit 302 based on a program stored in the storage unit 303. The content output processing is always executed in each control period. The content output processing will be described with reference to FIGS. 1 to 13 as appropriate. Although FIG. 14 illustrates an operation example of the electronic device MC1, the same applies to an operation of another device, for example, the information output device 100.

In step S601, the control unit 302 determines whether setting of outputting a content using the content providing service by the content providing server 200 is performed. The setting of content output is performed by a user operation or automatically. For example, on/off of content output may be set by a user operation. In addition, for example, when a predetermined condition is satisfied, it is possible to set a condition that the user enters a predetermined range with reference to a predetermined location, for example, the home, for example, during daytime periods. When setting of outputting a content is performed, the process proceeds to step S602. On the other hand, when setting of outputting a content is not performed, the operation of the content output processing is ended.

In step S602, the control unit 302 transmits predetermined information including position information acquired by the position information acquisition unit 304 to the content providing server 200. The position information included in the predetermined information is sequentially stored in the position information 212 of the device information DB 210. The position information stored in the position information 212 of the device information DB 210 and acquisition time are associated with each other and stored in the movement history 214. Accordingly, the content providing server 200 may acquire the movement history of the electronic device MC1. In addition, the information stored in the device information DB 210 is included in the predetermined information and transmitted as necessary.

In step S603, the control unit 302 determines whether a proximity condition based on a user operation is satisfied. For example, when a content acquisition operation such as a QR code reading operation or an image acquisition operation of an object including a feature portion is performed and predetermined information can be acquired based on the content acquisition operation, it is determined that the proximity condition based on the user operation is satisfied. When the proximity condition based on the user operation is satisfied, the process proceeds to step S604. On the other hand, when the proximity condition based on the user operation is not satisfied, the process proceeds to step S605.

In step S604, the control unit 302 transmits a content request to the content providing server 200 based on the user operation performed in step S604. For example, the control unit 302 executes access processing to the content providing server 200 based on access information to the content providing server 200 acquired according to the reading operation or the image acquisition operation. Next, the control unit 302 transmits, to the content providing server 200, a content request including a registration location ID and a user ID acquired according to the reading operation or the operation image acquisition operation.

In step S605, the control unit 302 determines whether a proximity condition based on position information or communication is satisfied. The proximity condition is determined using, for example, wireless communication or wired communication with another communication device. In addition, the proximity condition is determined using, for example, a relation between the position of the registration location and the position of the electronic device MC1. When the proximity condition based on the position information or the communication is satisfied, the process proceeds to step S606. On the other hand, when the proximity condition based on the position information or the communication is not satisfied, the operation of the content output processing is ended.

In step S606, the control unit 302 transmits a content request to the content providing server 200 based on the proximity condition established in step S605. For example, the control unit 302 transmits, to the content providing server 200, a content request including a registration location ID and a user ID acquired using wireless communication or position information. When determination processing of the proximity condition is executed in the content providing server 200, the processing of steps S603 to S606 may be omitted and the process may proceed to step S607.

In step S607, the control unit 302 determines whether the content transmitted from the content providing server 200 according to the content request is received. When the content is received from the content providing server 200, the process proceeds to step S608. On the other hand, when the content is not received from the content providing server 200, monitoring is continued. When the content is not received from the content providing server 200 even after a predetermined time elapses, the content request may be transmitted to the content providing server 200 again. In addition, the content providing server 200 provides a content and transmits information of the content output range 223 of the content DB 220 to the electronic device MC1.

In step S608, the control unit 302 executes output processing of outputting the content received in step S607. For example, the control unit 302 displays the content received in step S607 on the display unit 308. For example, the content is displayed on the display unit 308, as illustrated in FIG. 9 and a right side of FIG. 5. In addition, for example, the control unit 302 causes the sound output unit 309 to output, as a sound, the content received in step S607. For example, the sound information S1 is output from the sound output unit 309, as illustrated in FIG. 9.

In step S609, the control unit 302 transmits predetermined information including position information to the content providing server 200. The predetermined information is the same as the predetermined information illustrated in step S602.

In step S610, the control unit 302 determines whether a content stop operation is performed. When the content stop operation is performed, the content output processing is stopped, a content stop instruction is transmitted to the content providing server 200, and the operation of content provision processing is ended. On the other hand, when the content stop operation is not performed, the process proceeds to step S611. The content stop operation is, for example, a pressing operation of an end button. In addition, it may be determined that the content stop operation is performed at a timing when the electronic device MC1 passes through an end post installed out of the range of the registration location. In addition, it may be determined that the content stop operation is performed at a timing when a radio wave intensity of the electronic device MC1 becomes a predetermined value or less.

In step S611, the control unit 302 determines whether the content to be subjected to output processing in step S608 is out of an output range. That is, when the content is out of a range of the registration location where the content acquisition operation is performed in step S603 or the registration location where the proximity condition is satisfied in step S605, output of the content of the registration location is stopped. Specifically, the control unit 302 determines whether the position information acquired by the position information acquisition unit 304 is within a range of the content output range 223 of the content DB 220 received in step S607. When the position information acquired by the position information acquisition unit 304 is within the range of the content output range 223, the process returns to step S607. On the other hand, when the position information acquired by the position information acquisition unit 304 is out of the range of the content output range 223, the operation of the content output processing is ended.

### [Operation Example of Content Providing Server]

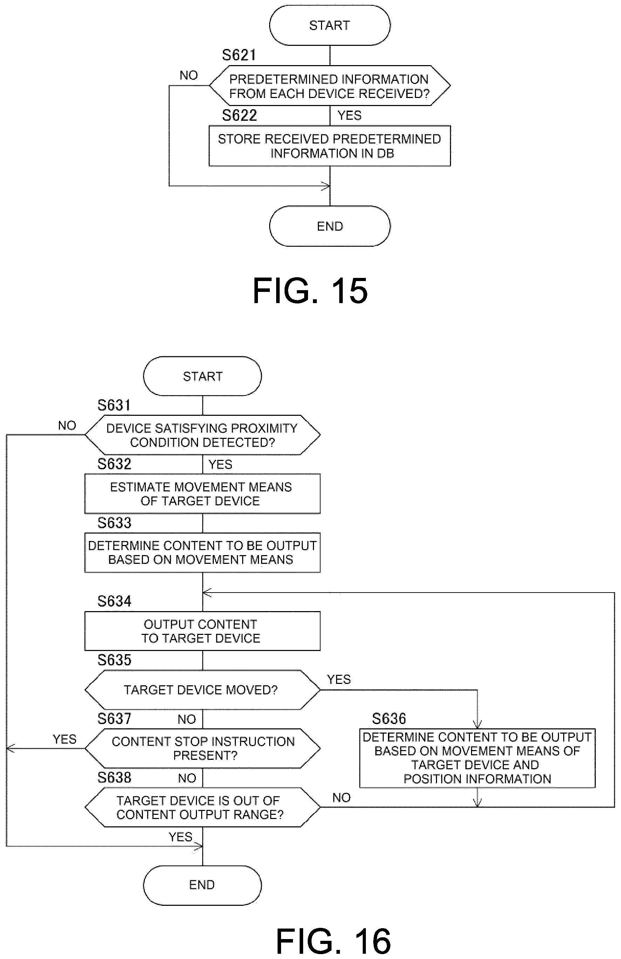

FIG. 15 is a flowchart illustrating an example of information storage processing in the content providing server 200. The information storage processing is executed by the control unit 202 based on a program stored in the storage unit 203. The information storage processing is always executed in each control period. The information storage processing will be described with reference to FIGS. 1 to 13 as appropriate.

In step S621, the control unit 202 determines whether predetermined information is received from each device for which use of the content providing service is registered. When the predetermined information is received, the process proceeds to step S622. On the other hand, when the predetermined information is not received, the operation of the information storage processing is ended.

In step S622, the control unit 202 stores the predetermined information received in step S621 in the device information DB 210. Specifically, the control unit 202 stores, in association with the user ID 211 corresponding to a device that transmits predetermined information, information included in the predetermined information in the device information DB 210.

### [Operation Example of Content Providing Server]

FIG. 16 is a flowchart illustrating an example of content provision processing in the content providing server 200. The content provision processing is executed by the control unit 202 or the like based on a program stored in the storage unit 203. The content provision processing is always executed in each control period. The content provision processing will be described with reference to FIGS. 1 to 13 as appropriate.

In step S631, the determination unit 204 determines whether a device satisfying the proximity condition is detected at the registration location. Detection processing of a device satisfying the proximity condition at the registration location may be executed by the content providing server 200 or may be executed based on reception of a content request (see FIG. 14) from the electronic device MC1. When a device satisfying the proximity condition is detected, the process proceeds to step S632. On the other hand, when no device satisfying the proximity condition is detected, the operation of the content provision processing is ended. In FIG. 16, a device detected as a device satisfying the proximity condition in step S631 is referred to as a target device.

In step S632, the estimation unit 205 estimates movement means of the target device detected in step S631. Estimation of the movement means may be performed by the above-described estimation methods.

In step S633, the content provision processing unit 206 determines a content to be output by the target device based on the movement means estimated in step S632. Specifically, the content 225 associated with the movement means estimated in step S632 is extracted from the movement means 224 associated with the registration location ID 221 of the registration location where the target device detected in step S631 is present. Then, the extracted content is determined as the content to be output by the target device.

In step S634, the content provision processing unit 206 transmits the content determined in step S633 to the target device.

In step S635, the determination unit 204 determines whether the target device moves. When the target device moves, the process proceeds to step S636. On the other hand, when the target device does not move, the process proceeds to step S637.

In step S636, the content provision processing unit 206 determines a content to be output by the target device based on position information of the target device after the movement and the movement means estimated in step S632. For example, even when the target device is present within a content output range, the content to be output can be changed according to the movement of the target device. When the target device is present within the content output range and the content to be output is not changed regardless of the movement of the target device, the processing of steps S635 and S636 can be omitted.

In step S637, the content provision processing unit 206 determines whether the content stop instruction is transmitted from the target device. When the content stop instruction is transmitted from the target device, content transmission processing is stopped and the operation of the content provision processing is ended. On the other hand, when the content stop instruction is not transmitted from the target device, the process proceeds to step S638.

In step S638, the determination unit 204 determines whether the target device is out of the content output range. Specifically, the determination unit 204 determines whether the position information 222 of the device information DB 210 corresponding to the target device is within the range of the content output range 223 of the content DB 220. When the position information 222 of the device information DB 210 corresponding to the target device is within the range of the content output range 223, the process returns to step S634. On the other hand, when the position information 222 of the device information DB 210 corresponding to the target device is out of the range of the content output range 223, the operation of the content provision processing is ended.

In this manner, in the present embodiment, for example, when the user U1 moves by walking, a content for walking can be provided to the user U1, and when the user U1 is moving by the automobile C1, a content for an automobile can be provided to the user U1. Accordingly, it is possible to more appropriately provide a content corresponding to each movement means. In addition, when a content corresponding to different movement means is provided, the user is given a sense of discomfort, but in the present embodiment, the sense of discomfort can be reduced. In addition, for example, it is possible to increase a value of user experience of movement by an automobile for a user riding in the automobile.

In addition, in the present embodiment, since it is possible to select a content to be output based on movement means of a user and output only a necessary content, it is possible to reduce a load of transmitting and receiving the content from the content providing server 200 to each device and the time thereof. Accordingly, it is possible to improve an efficiency of a computation load related to information processing.

In addition, since a next destination to be provided to the user can be changed according to movement means of various users gathering at one registration location, movement of the user to the next place can be distributed. Accordingly, congestion at the registration location can be avoided. In addition, it is also possible to reduce waiting time at the registration location.

Although an example in which presence determination processing of a user at a registration location, estimation processing of movement means of the user, and content provision processing are executed in the content providing server 200 has been described above, all or a part of the processing may be executed in another device. In this case, the information processing system is implemented by each device that executes a part of each processing. For example, at least a part of each processing can be executed using the electronic device MC1 used by the user U1, various information processing devices such as a server connectable via a predetermined network such as the Internet, and various electronic devices.

In the present embodiment, an example is illustrated in which the device information DB 210 (see FIG. 3) and the content DB 220 (see FIG. 4) are managed in the content providing server 200. However, all or a part of each DB may be managed by one or a plurality of devices other than the content providing server 200, and information of each DB managed by the other devices may be acquired and used for each processing.

A part (or all) of an information processing system capable of executing the function of the content providing server 200 may be provided by an application that may be provided via a predetermined network such as the Internet. This application is, for example, software as a service (SaaS).

### [Configuration and Effects of Present Embodiment]

The information processing method according to the present embodiment is an information processing method for providing information to the user U1. The information processing method includes acquisition processing (step S632) of acquiring movement means of the user U1, and provision processing (steps S633 and S634) of, when it is determined that the user U1 is present at a registration location (example of predetermined location), selecting at least one of a plurality of contents set for the registration location based on the movement means of the user U1 and providing the selected content to the user U1.

According to this configuration, it is possible to more appropriately provide a content corresponding to each movement means. In addition, since it is possible to select a content to be output based on movement means of a user and output only a necessary content, it is possible to reduce a load of transmitting and receiving the content from the content providing server 200 to each device and the time thereof. Accordingly, it is possible to improve an efficiency of a computation load related to information processing.

The information processing method according to the present embodiment further includes determination processing (step S631) of determining whether the user U1 is present at the registration location based on satisfaction of a proximity condition between the registration location and the electronic device MC1 associated with the user U1.

According to this configuration, since it is possible to provide a content set for a registration location where the proximity condition is satisfied, it is possible to provide a more appropriate content to the user.

In the information processing method according to the present embodiment, in the determination processing (step S631), it is determined that the proximity condition is satisfied and it is determined that the user U1 is present at the registration location in any one of a case where a current location of the electronic device MC1 is included in a predetermined range based on the registration location, a case where feature information (for example, feature portion FP1) related to the registration location is included in a captured image acquired by the electronic device MC1, and a case where exchange of predetermined information using wireless communication or wired communication is executed between the electronic device MC1 and the communication device 300 installed at the registration location.

According to this configuration, it is possible to improve the accuracy of determining presence of the user U1 at the registration location by setting a more appropriate proximity condition. In addition, it is possible to minimize environmental dependency by setting a plurality of proximity conditions.

In the information processing method according to the present embodiment, in the determination processing (step S631), when the feature portion FP1 of the object RO1 installed at the registration location is included in the captured image, or when predetermined identification information (for example, specific marker or object including feature portion) is included in the captured image, it is determined that the feature information is included in the captured image.

According to this configuration, the accuracy of determining the presence of the user U1 can be improved by using the feature portion FP1 of the object RO1 or predetermined identification information for the determination of the proximity condition.

In the information processing method according to the present embodiment, in the acquisition processing (step S632), the movement means of the user U1 is estimated based on device information (for example, information of device information DB 210) related to at least one of the electronic device MC1 associated with the user U1 and an installation device installed in the movement means used by the user U1.

According to this configuration, since the movement means can be estimated using the device information related to the electronic device MC1 or the installation device, the estimation accuracy of the movement means of the user U1 can be improved.

In the information processing method according to the present embodiment, in the acquisition processing (step S632), the movement means of the user U1 is estimated based on at least one of an attribute (for example, attribute information 213) of the electronic device MC1 or the installation device and information related to a movement history of the electronic device MC1 or the installation device as the device information.

According to this configuration, since the movement means can be estimated using the attribute of the electronic device MC1 or the installation device or the information related to the movement history of the electronic device MC1 or the installation device, the estimation accuracy of the movement means of the user U1 can be further improved.

In the information processing method according to the present embodiment, in the acquisition processing (step S632), at least one of a history of position information of the electronic device MC1 or the installation device (for example, movement history 214), a history of information related to an acceleration of the electronic device MC1 or the installation device (for example, vehicle information 215), a history of a captured image acquired by the electronic device MC1 or the installation device (for example, image information 216), and a history related to communication between the electronic device MC1 and the installation device (for example, connection information 217) is used as the information related to the movement history.

According to this configuration, since the movement means can be estimated using the history of the position information or the like as the information related to the movement history of the electronic device MC1 or the installation device, the estimation accuracy of the movement means of the user U1 can be further improved.

In the information processing method according to the present embodiment, the plurality of contents include information related to a position or a direction of another registration location (second predetermined location) different from the registration location (first predetermined location) where the user U1 is determined to be present. For example, the guide image 323 can be displayed as information related to the position or the direction of another registration location (location where building B1 is installed) different from registration locations where the RO1 to RO3 are installed, as illustrated in FIG. 5.

According to this configuration, the user U1 present at the first predetermined location may easily grasp and provide information related to the position or the direction of the second predetermined location.

In the information processing method according to the present embodiment, in the provision processing (steps S634 to S636), at least one of the plurality of contents set for the second predetermined location is selected and provided to the user U1 based on the movement means of the user U1 and the first predetermined location when it is determined that the user U1 moves to the second predetermined location. For example, it is assumed that a plurality of registration locations A to E present in a relatively close range are present and the registration location A is an entrance. In this case, for example, when the movement means is an automobile, it is possible to guide the registration location A → C → E, and when the movement means is walking, it is possible to guide the registration location A → B → D. In this case, for example, it is possible to select and provide, to the user who moves according to guidance (for example, in the case of an automobile, registration location A → C → E) according to the movement means, at least one of the plurality of contents set for the registration location after the movement, and it is possible to provide, to the user who moves without following the guidance (for example, in the case of an automobile, registration location A → C → E) according to the movement means, a content other than the content set for the registration location after the movement.

According to this configuration, it is possible to provide a more appropriate content according to the movement of the user U1.

In the information processing method according to the present embodiment, in the provision processing (step S634), the user U1 is provided with at least one of a plurality of the second predetermined locations is selected based on the movement means of the user U1, and a content related to the selected second predetermined location. For example, it is assumed that a plurality of registration locations A to E present in a relatively close range are present and the registration location A is an entrance. In this case, for example, when the movement means is an automobile, it is possible to guide the registration location A → C → E, and when the movement means is walking, it is possible to guide the registration location A → B → D.

According to this configuration, it is possible to provide a more appropriate second predetermined location according to the movement means of the user U1.

In the information processing method according to the present embodiment, in the provision processing (step S634), the user U1 is provided with a content selected based on the movement means of the user U1 and information indicating movement means used for the selection. For example, information indicating the movement means is displayed in the movement means display region 325, as illustrated in FIG. 5.

According to this configuration, even when the actual movement means of the user U1 does not match the estimation result, the user U1 can easily grasp the fact, and the feeling of discomfort on the content can be reduced.

In the information processing method according to the present embodiment, the content is at least one of sound information and image information. For example, both the sound information and the image information can be output, as illustrated in FIGS. 9 and 10.

According to this configuration, since at least one of the sound information and the image information can be provided as the content to the user U1 at the registration location, it is possible to implement information transmission that is easily grasped by the user.

In the information processing method according to the present embodiment, in the provision processing (see FIG. 12), the user U1 is provided with at least one of position information of another device present around the user U1, position information of the registration location, and a movement route to the registration location corresponding to the movement means of the user U1 based on the position information of the user U1 even when the proximity condition is not satisfied in the determination processing.

According to this configuration, when the user U1 heads for a registration location, it is possible to easily grasp information related to the registration location.

In the information processing method according to the present embodiment, in the provision processing (see FIG. 13), in a case where the user U1 is not present at the registration location, when a designation operation for designating the registration location is performed by the user U1, the user U1 is provided with at least one of at least one of the plurality of contents set for the registration location, a movement range or a movement route according to movement means related to the registration location, position information of another device present around the registration location, position information of the registration location, and a movement route to the registration location corresponding to the movement means of the user U1.

According to this configuration, even when the user U1 is not present at the registration location, it is possible to easily grasp information related to the registration location.

The content providing server 200 (example of information processing device) according to the present embodiment is an information processing device that provides information to the user U1.The content providing server 200 includes an estimation unit 205 (example of acquisition unit) configured to acquire movement means of the user U1, and a content provision processing unit 206 (example of provision unit) configured to, when it is determined that the user U1 is present at a registration location (example of predetermined location), select at least one of a plurality of contents set for the registration location based on the movement means of the user U1 and provide the selected content to the user U1.

According to this configuration, it is possible to appropriately provide a content corresponding to each movement means. In addition, since it is possible to select a content to be output based on movement means of a user and output only a necessary content, it is possible to reduce a load of transmitting and receiving the content from the content providing server 200 to each device and the time thereof. Accordingly, it is possible to improve an efficiency of a computation load related to information processing.

Each processing procedure described in the present embodiment is an example for implementing the present embodiment, and an order of a part of each processing procedure may be changed within the scope of implementing the present embodiment, or a part of each processing procedure may be omitted or other processing procedures may be added.

It should be noted that the processing described in the present embodiment is executed based on a program for causing a computer to execute each processing procedure. Therefore, the present embodiment can be grasped as an embodiment of a program that implements a function of executing the processing and a recording medium that stores the program. For example, the program can be stored in a storage device of a contact determination device by performing update processing for adding a new function to the contact determination device. Accordingly, it is possible to cause the updated contact determination device to perform the processing described in the present embodiment.

Although the embodiments of the present invention have been described above, the above embodiments merely exemplify some of application examples of the present invention and do not intend to limit the technical scope of the present invention to the specific configurations of the above embodiments.

## Claims

1. An information processing method for providing information to a user, the method comprising:
acquisition processing of acquiring movement means of the user; and
provision processing of, when it is determined that the user is present at a predetermined location, selecting at least one of a plurality of contents set for the predetermined location based on the movement means of the user and providing the selected content to the user.

2. The information processing method according to claim 1, further comprising:
determination processing of determining that the user is present at the predetermined location based on satisfaction of a proximity condition between the predetermined location and an electronic device associated with the user.

3. The information processing method according to claim 2, wherein
in the determination processing, it is determined that the proximity condition is satisfied and it is determined that the user is present at the predetermined location in any one of a case where a current location of the electronic device is included within a predetermined range based on the predetermined location, a case where feature information related to the predetermined location is included in a captured image acquired by the electronic device, and a case where exchange of predetermined information using wireless communication or wired communication is executed between the electronic device and a communication device installed at the predetermined location.

4. The information processing method according to claim 3, wherein
in the determination processing,
when a feature portion of an object installed at the predetermined location is included in the captured image, or when predetermined identification information is included in the captured image, it is determined that the feature information is included in the captured image.

5. The information processing method according to claim 1, wherein
in the acquisition processing, the movement means of the user is estimated based on device information related to at least one of an electronic device associated with the user and an installation device installed in the movement means used by the user.

6. The information processing method according to claim 5, wherein
in the acquisition processing, the movement means of the user is estimated based on at least one of an attribute of the electronic device or the installation device and information related to a movement history of the electronic device or the installation device as the device information.

7. The information processing method according to claim 6, wherein
in the acquisition processing, at least one of a history of position information of the electronic device or the installation device, a history of information related to an acceleration of the electronic device or the installation device, a history of a captured image acquired by the electronic device or the installation device, and a history related to communication between the electronic device and the installation device is used as the information related to the movement history.

8. The information processing method according to any one of claims 1 to 7, wherein
the plurality of contents include information related to a position or a direction of a second predetermined location which is another predetermined location different from a first predetermined location which is the predetermined location where the user is determined to be present.

9. The information processing method according to claim 8, wherein
in the provision processing, at least one of the plurality of contents set for the second predetermined location is selected and provided to the user based on the movement means of the user and the first predetermined location when it is determined that the user moves to the second predetermined location.

10. The information processing method according to claim 8, wherein
in the provision processing, the user is provided with at least one of a plurality of the second predetermined locations is selected based on the movement means of the user, and a content related to the selected second predetermined location.

11. The information processing method according to any one of claims 1 to 7, wherein
in the provision processing, the user is provided with a content selected based on the movement means of the user and information indicating movement means used for the selection.

12. The information processing method according to any one of claims 1 to 7, wherein
the content is at least one of sound information and image information.

13. The information processing method according to any one of claims 2 to 4, wherein
in the provision processing, the user is provided with at least one of position information of another device present around the user, position information of the predetermined location, and a movement route to the predetermined location corresponding to the movement means of the user based on position information of the user when the proximity condition is not satisfied in the determination processing.

14. The information processing method according to any one of claims 1 to 7, wherein
in the provision processing, in a case where the user is not present at the predetermined location, when a designation operation for designating the predetermined location is performed by the user, the user is provided with at least one of at least one of the plurality of contents set for the predetermined location, a movement range or a movement route corresponding to movement means related to the predetermined location, position information of another device present around the predetermined location, position information of the predetermined location, and a movement route to the predetermined location corresponding to the movement means of the user.

15. An information processing device comprising: a controller configured to execute processing of providing information to a user, wherein
the controller includes
an acquisition unit configured to acquire movement means of the user, and
a provision unit configured to, when it is determined that the user is present at a predetermined location, select at least one of a plurality of contents set for the predetermined location based on the movement means of the user and provide the selected content to the user.
